# DEMANDE DE BREVET EUROPEEN

(11) **EP 0 762 379 A1**
(43) Date de publication de la demande: **12.03.1997**
(21) Numéro de dépôt: 96401770.1
(22) Date de dépôt: 12.08.1996
(51) Int. Cl.: G10D 9/04, F16B 21/02

(54) **Instrument de musique à vent à boules usinées complètement avant leur fixation et son procédé de fabrication**

(30) Priorité: 08.09.1995 FR 9510528
(71) Demandeur: BUFFET-CRAMPON S.A. SOCIETE DITE:, F-78200 Mantes-La-Ville (FR)
(72) Inventeur: Winter, Michael, 6085 Nauheim (DE); Baronnat, Paul, Chantemesle, 95780 Haute Isle (FR)
(74) Mandataire: Eidelsberg, Victor Albert

(57) **Abrégé**

Cet instrument de musique à vent comprend une boule (7) fixée par un pied de fixation dans un trou du corps (2).

Le pied a une section transversale non circulaire et le trou est délimité par une paroi conjuguée non circulaire.

## Description

Les instruments de musique à vent, notamment les clarinettes et les hautbois et instruments similaires, comprennent un corps définissant une perce. Sur la face latérale extérieure du corps sont fixées des boules de clétage entre lesquelles sont montées ultérieurement des charnières ou des clés.

Jusqu'ici une boule métallique était fixée dans le corps par un pied fileté qui était vissé dans un trou taraudé ménagé à l'avance dans le corps. Après que la boule avait été fixée au corps, on l'usinait malgré les difficultés d'accès des outils et machines dues à la présence du corps. Il n'était pas possible d'usiner la boule préalablement à sa fixation, bien que cela aurait été plus facile, parce que le vissage dans un corps en un matériau relativement tendre, notamment en bois, en matière plastique ou en aggloméré, ne permettait pas d'être sur que la boule ait toujours la même orientation, les alésages ménagés dans les boules pour le passage des clés et des charnières pouvant ne plus être alignés.

L'invention pallie cet inconvénient par un instrument de musique, dans lequel il est possible d'effectuer un usinage complet-des boules avant le montage.

Suivant l'invention, le pied a une section transversale non circulaire et le trou est délimité par un bord non circulaire conjugué.

La section transversale comporte notamment, par exemple, une partie rectiligne ou deux parties rectilignes opposées et le trou est délimité par un bord rectiligne ou deux bords rectilignes opposés, encore qu'il soit possible de prévoir toute autre forme, et même de donner à la section transversale du pied la forme de deux arcs de cercles de rayons différents.

En enfonçant le pied dans son trou correspondant, on est sûr que la boule conserve l'orientation souhaitée en raison des méplats, correspondant aux parties rectilignes de la section transversale, qui la guident.

De préférence, le pied comporte une nervure perpendiculaire à l'axe de la boule et le trou comporte une rainure conjuguée de la nervure. Par axe de la boule on entend l'axe suivant laquelle elle est enfoncée dans le trou lors du montage. On maîtrise ainsi le niveau de la boule au dessus du corps.

L'invention vise également un procédé de fabrication d'un instrument de musique à vent qui consiste à fixer une boule de clétage à un corps. Le procédé est caractérisé en ce que l'on usine complètement la boule avant de la monter.

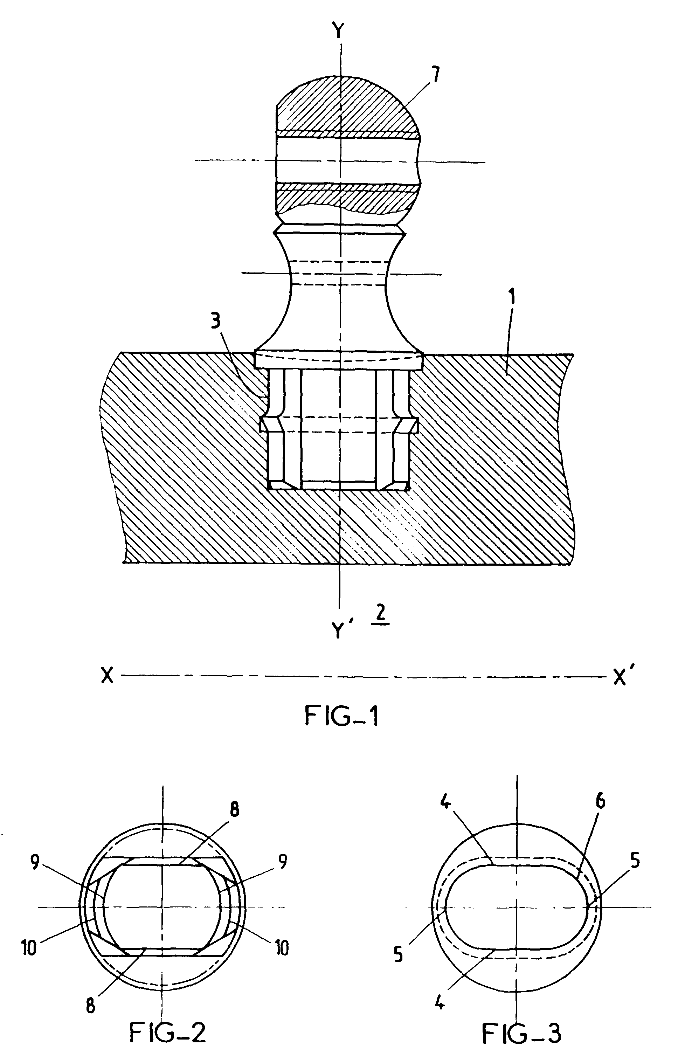

Au dessin annexé, donné uniquement à titre d'exemple, la figure 1 est une vue partiellement en coupe d'une demi clarinette,

la figure 2 est une vue de dessous, suivant la flèche II de la figure 1, du pied de la boule.

La figure 3 est une vue de dessus du trou, alors que le pied de la boule n'y est pas engagé.

A la figure 1, la clarinette comporte un corps 1 sensiblement annulaire, d'axe X-X', délimitant une perce 2.

Dans le corps 1 est ménagé un trou 3 qui, comme le montre la figure 3, comporte en section transversale deux parties 4 rectilignes opposées, reliées entre elles par deux arcs de cercle 5. Une rainure 6 est ménagée tout autour du trou.

Dans le trou 3 est enfoncé à force un pied d'une boule 7 d'axe Y-Y'. Ce pied comporte comme on le voit à la figure 2, deux méplats 8 opposés reliés entre eux par deux parties cylindriques 9 sur lesquelles sont ménagées des nervures 10.

Pour fabriquer la clarinette, on usine d'abord complètement la boule 7, puis on enfonce le pied 3 dans le trou, en sorte que les méplats 8,8 viennent en regard des parties rectilignes 4 et que les nervures 10 pénètrent dans la rainure 6 pour maintenir la boule enfoncée et ainsi empêcher un désassemblage involontaire.

## Revendications

1. Instrument de musique à vent comprenant un corps (1) sur la face latérale extérieure duquel est fixé une boule (7) de clétage pénétrant par un pied dans un trou du corps, caractérisé en ce que le pied a une section transversale non circulaire et le trou est délimité par une paroi non circulaire conjuguée.

2. Instrument suivant la revendication 1, caractérisé en ce que le pied comporte deux méplats opposés.

3. Instrument suivant la revendication 1, caractérisé en ce que le pied comporte une nervure (10) perpendiculaire à l'axe (Y-Y') de la boule (7) et le trou comporte une rainure (6) conjuguée de la nervure (10).

4. Instrument suivant la revendication 1, 2 ou 3, caractérisé en ce que le corps est en bois ou autre matériau tendre.

5. Procédé de fabrication d'un instrument de musique à vent, caractérisé en ce qu'il consiste à usiner complètement une boule de clétage, puis à la fixer au corps de l'instrument.
